(19) Europäisches Patentamt
European Patent Office
Office européen des brevets

(11) Publication number: **0 290 257 B1**

(12) # EUROPEAN PATENT SPECIFICATION

(45) Date of publication of patent specification: **15.04.92**

(51) Int. Cl.⁵: **A01N 43/52**, A01N 43/50, //(A01N43/52,43:40), (A01N43/50,43:40)

(21) Application number: **88304074.3**

(22) Date of filing: **05.05.88**

(54) **Herbicidal method comprising the use of diflufenican.**

(30) Priority: **05.05.87 GB 8710585**

(43) Date of publication of application: **09.11.88 Bulletin 88/45**

(45) Publication of the grant of the patent: **15.04.92 Bulletin 92/16**

(84) Designated Contracting States: **AT BE CH DE ES FR GB GR IT LI LU NL SE**

(56) References cited:
**EP-A- 0 190 666**
**GB-A- 2 087 887**

(73) Proprietor: **MAY & BAKER LIMITED**

**Dagenham Essex RM10 7XS(GB)**

(72) Inventor: **Hewett, Richard Henry**
**May & Baker Limited Dagenham**
**Essex, RM10 7XS(GB)**
Inventor: **Luscombe, Brian Malcolm**
**May & Baker Limited Dagenham**
**Essex, RM10 7XS(GB)**

(74) Representative: **Bentham, Stephen et al**
**J.A. Kemp & Co. 14 South Square Gray's Inn**
**London WC1R 5EU(GB)**



Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to new herbicidal compositions comprising N-(2,4-difluorophenyl)-2-(3-trifluoromethylphenoxy)nicotinamide of formula I depicted hereinafter, which is disclosed in the specification of British Patent No. 2087887B as a pre-and/or post-emergence herbicide, and to their use in agriculture.

U.S. Patent No. 4188487 discloses oxoimidazolinyl benzoic acid herbicides of general formula II depicted hereinafter wherein X is hydrogen, a straight- or branched-chain alkyl group containing from 1 to 3 carbon atoms, halogen or nitro; $R_1$ is a straight- or branched-chain alkyl group containing from 1 to 4 carbon atoms, $R_2$ is a straight- or branched-chain alkyl group containing from 1 to 6 carbon atoms, a cycloalkyl group containing from 3 to 6 carbon atoms, a straight- or branched-chain alkenyl group containing from 2 to 4 carbon atoms, phenyl, halophenyl or benzyl or when $R_1$ and $R_2$ are taken together with the carbon to which they are attached they may represent a cycloalkyl group containing from 3 to 6 carbon atoms optionally substituted with methyl; $R_3$ is hydrogen, a straight- or branched-chain alkyl group containing from 1 to 12 carbon atoms optionally substituted with one straight- or branched-chain alkoxy group containing from 1 to 3 carbon atoms or one cycloalkyl group containing from 3 to 6 carbon atoms or one phenyl group or one furyl group or with one to three halogen substituent(s), preferably chlorine, a straight- or branched-chain alkenyl group containing from 3 to 5 carbon atoms optionally substituted with one or two straight- or branched-chain alkyl group(s) containing from 1 to 3 carbon atoms or one phenyl group or with one or two halogen substituent(s), preferably chlorine, a straight- or branched-chain alkynyl group containing from 3 to 5 carbon atoms optionally substituted with one or two straight- or branched-chain alkyl group(s) containing from 1 to 3 carbon atoms or one phenyl group or with one or two halogen substituent(s), preferably chlorine, benzyl, cyclohexenylmethyl, ethynylcyclohexyl, ethynylalkyl, pentadienyl or a cycloalkyl group containing from 3 to 6 carbon atoms optionally substituted with one or two straight- or branched-chain alkyl group(s) containing from 1 to 3 carbon atoms; or a salt forming cation for example of alkali metals, ammonium and aliphatic ammonium; and when $R_1$ and $R_2$ are not the same the optical isomers and the isomeric mixtures thereof; and except when $R_3$ is a salt-forming cation, the acid addition salts thereof. Imazamethabenz-methyl [a mixture of methyl 6-(4-isopropyl-4-methyl-5-oxo-2-imidazolin-2-yl)-m-toluate and methyl 2-(4-isopropyl-4-methyl-5-oxo-2-imidazolin-2-yl)-p-toluate] is of particular interest.

It is to be understood that where in this specification reference is made to "an oxoimidazolinyl benzoic acid herbicide" it is intended to refer to the oxoimidazolinyl benzoic acid herbicide in the form of the parent acid (acid equivalent), herbicidally active enantiomeric forms when they exist, an agriculturally acceptable salt (or mixture of salts) or an ester (or mixture of esters) thereof, preferably a metal or amine or acid addition salt or an ester thereof with a straight- or branched-chain alkanol containing from 1 to 12 carbon atoms optionally substituted by a $C_{1-3}$-alkoxy group, or a mixture thereof where the context so permits.

As a result of research and experimentation it has now been discovered that the use of the compound N-(2,4-difluorophenyl)-2-(3-trifluoromethylphenoxy)nicotinamide (hereinafter referred to for convenience as diflufenican) in combination with an oxoimidazolinyl benzoic acid herbicide control a wide spectrum of broad leaf weeds and grasses by pre- or post-emergence application.

Surprisingly, in addition to this, it has been found that the combined herbicidal activity of combinations of diflufenican with the oxoimidazolinyl benzoic acid herbicide against certain broad-leaf weeds species is much greater than expected, i.e. the herbicidal activity of combinations of diflufenican with oxoimidazolinyl benzoic acid herbicide showed an unexpected and remarkable degree of synergism [as defined by P.M.L. Tammes, Netherlands Journal of Plant Pathology, 70 (1964), pp 73-80 in a paper entitled "Isoboles, a graphic representation of synergism in pesticides"].

The remarkable synergistic effect of the mixture applied post-emergence gives improved reliability of control of weed species occurring in cereal cultures and allows for a reduction in the amount of active ingredient employed. Another feature of the invention is the lack of antagonism between the herbicides on wild oat, Avena fatua. On this grass weed an additive effect is found.

Accordingly the present invention provides a method for the control of the growth of weeds at a locus by pre- or post-emergence application which comprises applying to the locus (a) an oxoimidazolinyl benzoic acid herbicide of general formula II wherein the various symbols are as hereinbefore defined, preferably imazamethabenz-methyl, and (b) diflufenican, for example at application rates of from 125 to 500 g a.i./ha of (a) and from 25 to 250 g/ha of (b) in proportions of 20:1 to 1:2 wt/wt. The method can be used to control a broad spectrum of weed species, especially in cereal crops, e.g. wheat or barley, without significant damage to the crop.

By the term 'pre-emergence application' is meant application to the soil in which the weed seeds or seedlings are present before emergence of the weeds above the surface of the soil. By the term 'post-emergence application' is meant application to the aerial or exposed portions of the weeds which have

emerged above the surface of the soil. By the term 'foliar activity' is meant herbicidal activity produced by application to the aerial or exposed portions of the weeds which have emerged above the surface of the soil. By the term 'residual activity' is meant herbicidal activity produced by application to the soil in which weed seeds or seedlings are present before emergence of the weeds above the surface of the soil, whereby seedlings present at the time of application or which germinate subsequent to application from seeds present in the soil, are controlled.

Weeds that may be controlled by the method include:- from broad-leaf weeds, Abutilon theophrasti, Amaranthus retroflexus, Amsinckia intermedia, Anagallis arvensis, Anthemis arvensis, Anthemis cotula, Atriplex patula, Brassica nigra, Capsella bursa-pastoris, Chenopodium album, Cirsium arvense, Datura stramonium, Euphorbia helioscopia, Galeopsis tetrahit, Galium aparine, Lamium amplexicaule, Lamium purpuream, Matricaria inodora, Myosotis arvensis, Papaver rhoeas, Plantago lanceolata, Polygonum spp. (e.g. Polygonum aviculare, Polygonum convolvulus and Polygonum persicaria), Portulaca oleracea, Raphanus raphanistrum, Senecio vulgaris, Sesbania florida, Sida spinosa, Silene alba, Sinapis arvensis, Solanum nigrum, Stellaria media, Thlaspi arvense, Urtica urens, Veronica hederifolia, Veronica persica and Viola arvensis, and from grass weeds, Alopecurus myosuroides, Apera spica-venti, Agrostis stolonifera, Avera spp. (e.g. Avena fatua, Avena ludoviciana), Lolium multiflorum, Poa annua, Poa trivialis, Digitaria sanguinalis, Echinochloa crus-galli, Eleusine indica, Setaria faberi and Setaria viridis

In accordance with usual practice, a tank mix may be prepared prior to use by combining separate formulations of the individual herbicidal components, or separate formulations may be applied in a time-separated manner.

The following greenhouse experiments illustrate the present invention by demonstrating the synergistic activity of the combined use of imazamethabenz-methyl and diflufenican in controlling the growth of Stellaria media, Galium aparine and Veronica persica and the additive activity on Avena fatua.

Experiment 1

Greenhouse experiment showing the nature of biological synergism between imazamethabenz-methyl and diflufenican against Stellaria, Galium and Veronica

A wide range of doses of imazamethabenz-methyl, i.e. 87, 156, 312 and 624 g ai/ha (formulated as the commercial product 'Assault' containing 30% w/v imazamethabenz-methyl), and of diflufenican, i.e. 32, 63, 125, 250 and 500 g ai/ha (in a composition according to Example 1 as described hereinafter), were applied at a spray volume of 290 l/ha to sets of four replicate 7.5 cm square pots of loam soil each planted with 4 Stellaria media plants at the 4 leaf stage, 4 Galium aparine plants at the 2 whorl stage or 4 Veronica persica plants at the 2-4 leaf stage. After spraying, the pots were arranged in randomised blocks in a greenhouse, watered as necessary, and assessed after 14 days for percentage phytotoxicity (reduction in green area compared with unsprayed plants)(0 = no effect, 100 = complete destruction).

From these results the $ED_{90}$ values (effective dose giving 90% phytotoxicity) in grams of diflufenican per hectare, for Stellaria media, Galium aparine, Veronica persica and Avena fatua respectively, were calculated for diflufenican alone and for diflufenican with increasing rates of imazamethabenz-methyl and for imazamethabenz-methyl alone.

Imazamethabenz-methyl applied alone was found to have no activity on Stellaria media.

The $ED_{90}$ values for Stellaria media were as follows:-

| | $ED_{90}$ |
|---|---|
| Diflufenican alone | 213 |
| Diflufenican with 78 g imzamethabenz-methyl/ha | 208 |
| Diflufenican with 156 g imazamethabenz-methyl/ha | 163 |
| Diflufenican with 312 g imazamethabenz-methyl/ha | 125 |
| Diflufenican with 624 g imazamethabenz-methyl/ha | less than 32 |

the $ED_{90}$ values for Galium aparine were:-

| | $ED_{90}$ |
|---|---|
| Diflufenican alone | 807* |
| Diflufenican with 78 g imazamethabenz-methyl/ha | 117 |
| Diflufenican with 156 g imazamethabenz-methyl/ha | 101 |
| Diflufenican with 312 g imazamethabenz-methyl/ha | less than 32 |
| Diflufenican with 624 g imazamethabenz-methyl/ha | less than 32 |
| Imazamethabenz-methyl alone | 911* |

the $ED_{90}$ values for Veronica persica were:-

| | $ED_{90}$ |
|---|---|
| Diflufenican alone | 208 |
| Diflufenican with 78 g imazamethabenz-methyl/ha | 72 |
| Diflufenican with 156 g imazamethabenz-methyl/ha | 32 |
| Diflufenican with 312 g imazamethabenz-methyl/ha | less than 32 |
| Diflufenican with 624 g imazamethabenz-methyl/ha | less than 32 |
| Imazamethabenz-methyl alone | 1952* |

* obtained by extrapolation of dose response curve

The results for Stellaria media were then used to plot an isobole with a "one-sided effect" according to the methods of P.M.L. Tammes, op. cit. The isoboles produced, shown hereinafter in Figure I, were clearly type II curves (Tammes, op. cit., page 74), characteristic of synergism. The results for Galium aparine, Veronica persica and Avena fatua were used to plot isoboles with a "two-sided effect" according to the methods of P.M. Tammes, op. cit. The isoboles produced, shown in Figures II and III for Galium and Veronica respectively were clearly type III curves (Tammes, op. cit., page 75) characteristic of synergism.

Experiment 2

Greenhouse experiment showing the effect of diflufenican on activity of imazamethabenz-methyl against Avena fatua

Similar treatments to those used in Experiment 1 were applied to 7 Avena fatua plants per pot at the 1 leaf stage. Assessment of activity was carried out as in Experiment 1. From these results the $ED_{90}$ values in grams of imazamethabenz-methyl per hectare were calculated for imazamethabenz-methyl alone and imazamethabenz-methyl with increasing rates of diflufenican and for diflufenican alone. The results are as follows:-

| | | ED$_{90}$ |
|---|---|---|
| Imazamethabenz-methyl alone | | 176 |
| Imazamethabenz-methyl with 32 g diflufenican/ha | | 173 |
| Imazamethabenz-methyl with 63 g diflufenican/ha | | 97 |
| Imazamethabenz-methyl with 125 g diflufenican/ha | | 143 |
| Imazamethabenz-methyl with 250 g diflufenican/ha | | 78 |
| Imazamethabenz-methyl with 500 g diflufenican/ha | less than | 78 |
| Diflufenican alone | | 526* |

[* obtained by extrapolation of dose response curve]

were used to plot an isobole with a "two-sided effect" according to the methods of P.M. Tammes, op. cit. The isobole produced, shown in Figure IV was a type II curve indicative of addition (Tammes, op. cit., page 75). This clearly demonstrates that combination of diflufenican with imazamethabenz-methyl does not antagonise the activity of the latter against Avena fatua.

According to a further feature of the present invention, there is provided a product comprising (a) an oxoimidazolinyl benzoic acid herbicide of general formula II wherein the various symbols are as hereinbefore defined preferably imazamethabenz-methyl and (b) diflufenican as a combined preparation for simultaneous, separate or sequential use in controlling the growth of weeds at a locus.

According to a feature of the present invention, there are provided compositions suitable for herbicidal use comprising (a) an oxoimidazolinyl benzoic acid herbicide of general formula II wherein the various symbols are as hereinbefore defined, preferably imazamethabenz-methyl, and (b) diflufenican, for example in proportions of 20:1 to 1:2 w/w in association with, and preferably homogeneously dispersed in, one or more compatible herbicidally-acceptable diluents or carriers and/or surface-active agents (i.e. diluents or carriers or surface-active agents of the type generally accepted in the art as being suitable for use in herbicidal compositions and which are compatible with the oxoimidazolinyl benzoic acid herbicide of general formula II wherein the various symbols are as hereinbefore defined and diflufenican). The term "homogeneously dispersed" is used to include compositions in which the oxoimidazolinyl benzoic acid herbicide of general formula II wherein the various symbols are as hereinbefore defined and diflufenican are dissolved in the other components. The term "herbicidal compositions" is used in a broad sense to include not only compositions which are ready for use as herbicides but also concentrates which must be diluted before use. Preferably, the compositions contain from 0.05 to 90% by weight of the oxoimidazolinyl benzoic acid herbicide of general formula II wherein the various symbols are as hereinbefore defined and diflufenican.

The herbicidal compositions may contain both a diluent or carrier and a surface-active (e.g. wetting, dispersing, or emulsifying) agent. Surface-active agents which may be present in herbicidal compositions of the present invention may be of the ionic or non-ionic types, for example sulphoricinoleates, quaternary ammonium derivatives, products based on condensates of ethylene oxide with nonyl- or octylphenols, or carboxylic acid esters of anhydrosorbitols which have been rendered soluble by etherification of the free

hydroxy groups by condensation with ethylene oxide, alkali and alkaline earth metal salts or sulphuric acid esters and sulphonic acids such as dinonyl- and dioctyl-sodium sulphono-succinates and alkali and alkaline earth metal salts of high molecular weight sulphonic acid derivatives such as sodium and calcium lignosulphonates. Examples of suitable solid diluents or carriers are aluminium silicate, talc, calcined magnesia, kieselguhr, tricalcium phosphate, powdered cork, adsorbent carbon black and clays such as kaolin and bentonite. The solid compositions (which may take the form of dusts, granules or wettable powders) are preferably prepared by grinding the oxoimidazolinyl benzoic acid herbicide of general formula II wherein the various symbols are as hereinbefore defined and diflufenican with solid diluents or by impregnating the solid diluents or carriers with solutions of the oxoimidazolinyl benzoic acid herbicide of general formula II wherein the various symbols are as hereinbefore defined and diflufenican in volatile solvents, evaporating the solvents and, if necessary, grinding the products so as to obtain powders. Granular formulations may be prepared by absorbing the oxoimidazolinyl benzoic acid herbicide of general formula II wherein the various symbols are as hereinbefore defined and diflufenican (dissolved in volatile solvents) onto the solid diluents or carriers in granular form and evaporating the solvents, or by granulating compositions in powder form obtained as described above. Solid herbicidal compositions, particularly wettable powders, may contain wetting or dispersing agents (for example of the types described above), which may also, when solid, serve as diluents or carriers.

Liquid compositions according to the invention may take the form of aqueous, organic or aqueous-organic solutions, suspensions and emulsions which may incorporate a surface-active agent. Suitable liquid diluents for incorporation in the liquid compositions include water, acetophenone, cyclohexanone, isophorone, toluene, xylene and mineral, animal and vegetable oils (and mixtures of these diluents). Surface-active agents, which may be present in the liquid compositions, may be ionic or non-ionic (for example of the types described above) and may, when liquid, also serve as diluents or carriers.

Wettable powders and liquid compositions in the form of concentrates may be diluted with water or other suitable diluents, for example mineral or vegetable oils, particularly in the case of liquid concentrates in which the diluent or carrier is an oil, to give compositions ready for use. When desired, liquid compositions of the oxoimidazolinyl benzoic acid herbicide of general formula II wherein the various symbols are as hereinbefore defined and diflufenican may be used in the form of self-emulsifying concentrates containing the active substances dissolved in the emulsifying agents or in solvents containing emulsifying agents compatible with the active substances, the simple addition of water to such concentrates producing compositions ready for use.

Liquid concentrates in which the diluent or carrier is an oil may be used without further dilution using the electrostatic spray technique.

Herbicidal compositions according to the present invention may also contain, if desired, conventional adjuvants such as adhesives, protective colloids, thickeners, penetrating agents, stabilisers, sequestering agents, anti-caking agents, colouring agents and corrosion inhibitors. These adjuvants may also serve as carriers or diluents.

Preferred herbicidal compositions according to the present invention are aqueous suspension concentrates which comprise from 10 to 70% w/v of the oxoimidazolinyl benzoic acid herbicide of general formula II wherein the various symbols are as hereinbefore defined and diflufenican, from 2 to 10% w/v of surface-active agent, from 0.1 to 5% w/v of thickener and from 15 to 87.9% by volume of water; wettable powders which comprise from 10 to 90% w/w of the oxoimidazolinyl benzoic acid herbicide of general formula II wherein the various symbols are as hereinbefore defined and diflufenican, from 2 to 10% w/w of surface-active agent and from 8 to 88% w/w of solid diluent or carrier; liquid water soluble concentrates which comprise from 10 to 30% w/v of the oxoimidazolinyl benzoic acid herbicide of general formula II wherein the various symbols are as hereinbefore defined and diflufenican, from 5 to 25% w/v of surface-active agent and from 45 to 85% by volume of water-miscible solvent, e.g. dimethylformamide; liquid emulsifiable suspension concentrates which comprise 10 to 70% w/v of the oxoimidazolinyl benzoic acid herbicide of general formula II wherein the various symbols are as hereinbefore defined and diflufenican, from 5 to 15% w/v of surface-active agent, from 0.1 to 5% w/v of thickener and from 10 to 84.9% by volume of organic solvent; granules which comprise from 2 to 10% w/w of the oxoimidazolinyl benzoic acid herbicide of general formula II wherein the various symbols are as hereinbefore defined and diflufenican, from 0.5 to 2% w/w of surface-active agent and from 88 to 97.5% w/w of granular carrier and emulsifiable concentrates which comprise from 0.05 to 90% w/v, and preferably from 1 to 60% w/v, of the oxoimidazolinyl benzoic acid herbicide of general formula II wherein the various symbols are as hereinbefore defined and diflufenican, from 0.01 to 10% w/v, and preferably from 1 to 10% w/v, of surface-active agent and from 9.99 to 99.94%, and preferably from 39 to 98.99%, by volume of organic solvent.

Herbicidal compositions according to the present invention may also comprise the oxoimidazolinyl

benzoic acid herbicide of general formula II wherein the various symbols are as hereinbefore defined and diflufenican in association with, and preferably homogeneously dispersed in, one or more other pesticidally active compounds and, if desired, one or more compatible pesticidally acceptable diluents or carriers, surface-active agents and conventional adjuvants as hereinbefore described. Examples of other pesticidally active compounds which may be included in, or used in conjunction with, the herbicidal compositions of the present invention include herbicides, for example to increase the range of weed species controlled, for example chlortoluron [N′-(3-chloro-4-methylphenyl)- N, N-dimethylurea], cyanazine [2-chloro-4-(1-cyano-1-methylethylamino)-6-ethylamino-1,3,5-triazine], isoproturon [N′-(4-isopropylphenyl)-N,N-dimethylurea], linuron [N′-(3,4-dichlorophenyl)-N-methoxy-N-methylurea], MCPA [4-chloro-2-methylphenoxyacetic acid], at low doses e.g. 50-200 g of MCPA/ha, methabenzthiazuron [N-(benzothiazol-2-yl)-N, N′-dimethylurea], hydroxybenzonitriles, e.g. bromoxynil and ioxynil;
insecticides, e.g. carbaryl [naphth-1-yl N-methylcarbamate] and synthetic pyrethroids, e.g. permethrin and cypermethrin; and fungicides, e.g. 2,6-dimethyl-4-tridecyl-morpholine, methyl N-(1-butylcarbamoylbenzimidazol-2-yl)carbamate, 1,2-bis-(3-methoxycarbonyl-2-thioureido)benzene, isopropyl 1-carbamoyl-3-(3,5-dichlorophenyl)hydantoin and 1-(4-chlorophenoxy)-3,3-dimethyl-1-(1,2,4-triazol-1-yl)butan-2-one. Other biologically active materials which may be included in, or used in conjunction with, the herbicidal compositions of the present invention are plant growth regulators, e.g. succinamic acid, (2-chloroethyl)trimethylammonium chloride and 2-chloroethanephosphonic acid; and fertilizers containing, for example, nitrogen, potassium and phosphorus and trace elements known to be essential to successful plant life, e.g. iron, magnesium, zinc, manganese, cobalt and copper.

Pesticidally active compounds and other biologically active materials which may be included in, or used in conjunction with, the herbicidal compositions of the present invention, for example those hereinbefore mentioned, and which are acids, may, if desired, be utilized in the form of conventional derivatives, for example alkali metal and amine salts and esters.

The compositions of the invention may be made up as an article of manufacture comprising the oxoimidazolinyl benzoic acid herbicide of general formula II wherein the various symbols are as hereinbefore defined and diflufenican and optionally other biologically active compounds as hereinbefore described or, as is preferred, a herbicidal composition as hereinbefore described, and preferably a herbicidal concentrate which must be diluted before use, comprising the oxoimidazolinyl benzoic acid herbicide of general formula II wherein the various symbols are as hereinbefore defined and diflufenican within a container for the aforesaid oxoimidazolinyl benzoic acid herbicide of general formula II wherein the various symbols are as hereinbefore defined and diflufenican or a said herbicidal composition, and instructions physically associated with the aforesaid container setting out the manner in which the aforesaid oxoimidazolinyl benzoic acid herbicide of general formula II wherein the various symbols are as hereinbefore defined and diflufenican or herbicidal composition contained therein is to be used to control the growth of weeds. The containers will normally be of the types conventionally used for the storage of chemical substances which are solids at normal ambient temperatures and herbicidal compositions, particularly in the form of concentrates, for example cans and drums of metal, which may be internally-lacquered, and plastics materials, bottles of glass and plastics materials and, when the contents of the container is a solid, for example granular herbicidal compositions, boxes, for example of cardboard, plastics materials and metal, or sacks. The containers will normally be of sufficient capacity to contain amounts of the active ingredients or herbicidal compositions sufficient to treat at least 0.5 hectares of ground to control the growth of weeds therein but will not exceed a size which is convenient for conventional methods of handling. The instructions will be physically associated with the container, for example by being printed directly thereon or on a label or tag affixed thereto. The directions will normally indicate that the contents of the container, after dilution if necessary, are to be applied to control the growth of weeds at rates of application from 125 g to 500 g a.i. of the oxoimidazolinyl benzoic acid herbicide of general formula II wherein the various symbols are as hereinbefore defined and from 25 g to 250 g of diflufenican per hectare in the manner and for the purposes hereinbefore described.

The following Examples illustrate herbicidal compositions according to the present invention.

EXAMPLE 1

An aqueous suspension concentrate was made from: diflufenican 50% w/v
propylene glycol 5% w/v
Olin 10 G (para-nonylphenoxy polyglycidol) 0.67% w/v
Soprophor FL (triethanolamine salt of oxyethylated polyarylphenolphosphate) 1.33% w/v
Antifoam FD (silicone antifoam) 0.01% w/v

Rhodigel 23 (xanthan gum) 0.2% w/v
dichlorophen sodium solution, 40% w/w 0.25% w/v
water to 100% by volume
by blending the diflufenican with an aqueous solution of the Soprophor EL, Antifoam FD and Ethylan BCP and milling through a bead-mill. An aqueous solution of the Rhodigel 23, dichlorophen sodium solution and propylene glycol is then blended with the milled slurry and made up to volume with water.

EXAMPLE 2

An aqueous suspension concentrate was made from:-diflufenican 4% w/v
imazamethabenz-methyl 10% w/v
propylene glycol 5% w/v
Olin 10 G (para-nonylphenoxy polyglycidol) 0.67% w/v
Soprophor FL (triethanolamine salt of oxyethylated polyarylphenolphosphate) 1.33% w/v
Antifoam FD (silicone antifoam) 0.01% w/v
Rhodigel 23 (xanthan gum) 0.2% w/v
dichlorophen sodium solution, 40% w/w 0.25% w/v
water to 100% by volume

2.5 litres of the resulting formulation were diluted to 300 litres with water and used at a rate of 300l/ha to control Avena fatua, Galium aparine, Stellaria media, Viola arvensis, Veronica persica by post-emergence application in a crop of wheat.

EXAMPLE 3

A 20:1 mixture was formed by tank mixing 1667 ml 'Assault' with 50 ml of the composition of Example 1 in a volume of 200 litres of water. The resulting spray fluid was applied to one hectare of winter wheat to control Avena fatua and Viola arvensis.

EXAMPLE 4

A 1:2 mixture was formed by tank mixing 417 ml of 'Assault' with 500 ml of the composition of Example 1 in a volume of 200 liters of water. The resulting spray fluid was applied to one hectare of winter wheat to control Avena fatua, Viola arvensis, Veronica persica, Galium aparine and Stellaria media.

In the mixed formulations in the Examples described hereinbefore, the oxoimidazolinyl benzoic acid herbicide may be replaced by the appropriate quantities of other oxoimidazolinyl benzoic acid herbicides.

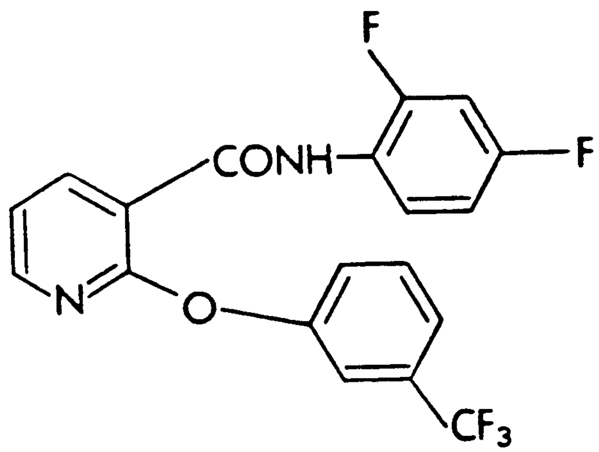

I

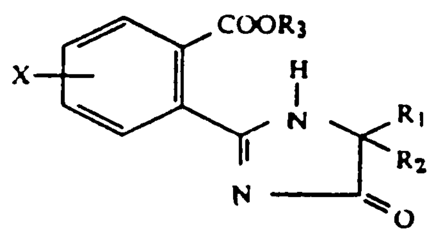

II

## Claims

1. A herbicidal composition which comprises (a) an oxoimidazolinyl benzoic acid herbicide of the general formula:

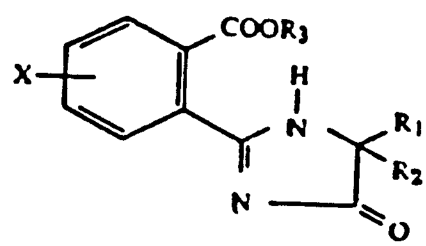

II

wherein X is hydrogen, a straight- or branched-chain alkyl group containing from 1 to 3 carbon atoms, halogen or nitro;
$R_1$ is a straight- or branched-chain alkyl group containing from 1 to 4 carbon atoms;
$R_2$ is a straight- or branched-chain alkyl group containing from 1 to 6 carbon atoms, a cycloalkyl group containing from 3 to 6 carbon atoms, a straight- or branched-chain alkenyl group containing from 2 to 4 carbon atoms, phenyl, halophenyl or benzyl or when $R_1$ and $R_2$ are taken together with the carbon to which they are attached they may represent a cycloalkyl group containing from 3 to 6 carbon atoms optionally substituted with methyl; $R_3$ is hydrogen, a straight- or branched-chain alkyl group containing from 1 to 12 carbon atoms optionally substituted with one straight- or branched-chain alkoxy group containing from 1 to 3 carbon atoms or one cycloalkyl group containing from 3 to 6 carbon atoms or one phenyl group or one furyl group or with one to three halogen substituents, a straight- or branched-chain alkenyl group containing from 3 to 5 carbon atoms optionally substituted with one or two straight- or branched-chain alkyl groups containing from 1 to 3 carbon atoms or one phenyl group or with one or two halogen substituents, a straight- or branched-chain alkynyl group containing from 3 to 5 carbon atoms optionally substituted with one or two straight- or branched-chain alkyl groups containing from 1 to 3 carbon atoms or one phenyl group or with one or two halogen substituents, benzyl, cyclohexenylmethyl, ethynylcyclohexyl, ethynylallyl, pentadienyl or a cycloalkyl group containing from 3 to 6 carbon atoms optionally substituted with one or two straight- or branched-chain alkyl groups containing from 1 to 3 carbon atoms; or a salt forming cation; or, when $R_1$ and $R_2$ are not the same, an optical isomer or isomeric mixture thereof; or, except when $R_3$ is a salt-forming cation, an acid addition salt thereof; and (b) diflufenican which is N-(2,4-difluorophenyl)-2-(3-trifluoromethylphenoxy)nicotinamide, in association with an agriculturally acceptable diluent or carrier and/or surface active agent.

2. A herbicidal composition according to claim 1 in which the oxoimidazolinyl benzoic acid herbicide of general formula II is imazamethabenz-methyl which is a mixture of methyl 6-(4-isopropyl-4-methyl-5-oxo-2-imidazolin-2-yl)-m-toluate and methyl 2-(4-isopropyl-4-methyl-5-oxo-2-imidazolin-2-yl)-p-toluate.

3. A herbicidal composition according to claim 1 or 2 in which the ratio of (a) to (b) is 20 : 1 to 1 : 2 w/w.

4. A herbicidal composition according to claim 1, 2 or 3 which comprises from 0.05 to 90% by weight of (a) and (b).

5. A herbicidal composition according to any one of the preceding claims which comprises a surface active agent.

6. A method of controlling the growth of weeds at a locus which comprises applying to the locus (a) an oxoimidazolinyl benzoic acid herbicide of general formula II as defined in claim 1 and (b) diflufenican.

7. A method according to claim 6 in which the oxoimidazolinyl benzoic acid herbicide is imazamethabenz-methyl.

8. A method according to claim 6 or 7 in which (a) is applied at a rate of from 125 to 500g a.i./ha and (b) is applied at a rate of from 25 to 250g/ha in a proportion of 20 : 1 to 1 : 2 w/w.

9. A product comprising (a) an oxoimidazolinyl benzoic acid herbicide as defined in claim 1 and (b) diflufenican as a combined preparation for simultaneous, separate or sequential use in controlling the growth of weeds at a locus.

10. A product according to claim 9 in which the oxoimidazolinyl benzoic acid herbicide is imazamethabenz-methyl.

**Revendications**

1. Une composition herbicide, caractérisée en ce qu'elle comprend (a) un herbicide du type acide oxoimidazolinylbenzoïque de formule générale :

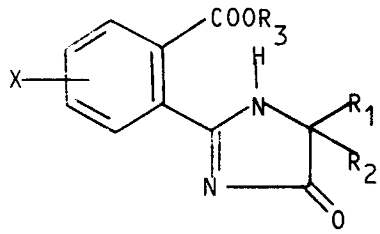

II

dans laquelle X est un atome d'hydrogène ou d'halogène ou un groupe alkyle à chaîne droite ou ramifiée en $C_1$-$C_3$ ou un groupe nitro;

$R_1$ est un groupe alkyle à chaîne droite ou ramifiée en $C_1$-$C_4$;
$R_2$ est un groupe alkyle à chaîne droite ou ramifiée en $C_1$-$C_6$, un groupe cycloalkyle en $C_3$-$C_6$, un groupe alcényle à chaîne droite ou ramifiée en $C_2$-$C_4$, un groupe phényle, un groupe halogénophényle ou un groupe benzyle ou bien, lorsque $R_1$ et $R_2$ sont pris ensemble avec l'atome de carbone auquel ils sont liés, ils peuvent représenter un groupe cycloalkyle en $C_3$-$C_6$ facultativement substitué par méthyle;
$R_3$ est un atome d'hydrogène ou un groupe alkyle à chaîne droite ou ramifiée en $C_1$-$C_{12}$ facultativement substitué par un groupe alcoxy à chaîne droite ou ramifiée en $C_1$-$C_3$ ou un groupe cycloalkyle en $C_3$-$C_6$ ou un groupe phényle ou un groupe furyle ou par 1 à 3 substituants halogènes, un groupe alcényle à chaine droite ou ramifiée en $C_3$-$C_5$ facultativement substitué par un ou deux groupes alkyles à chaîne droite ou ramifiée en $C_1$-$C_3$ ou un groupe phényle ou par un ou deux substituants halogènes, un groupe alcynyle à chaîne droite ou ramifiée en $C_3$-$C_5$ facultativement substitué par un ou deux groupes alkyles à chaîne droite ou ramifiée en $C_1$-$C_3$ ou un groupe phényle ou par un ou deux substituants halogènes, benzyle, cyclohexénylméthyle, éthynylcyclohexyle, éthynylallyle, pentadiényle ou un groupe cycloalkyle en $C_3$-$C_6$, facultativement substitué par un ou deux groupes alkyles à chaîne droite ou ramifiée en $C_1$-$C_3$; ou un cation formant un sel; ou bien, lorsque $R_1$ et $R_2$ ne sont pas les mêmes, un isomère ou mélange d'isomères optiques; ou bien, sauf lorsque $R_3$ est un cation formant un sel, un de ses sels d'addition d'acides; et (b) du diflufénican qui est le N-(2,4-difluorophényl)-2-(3-trifluorométhylphénoxy)nicotinamide, en association avec un diluant ou support et/ou un tensioactif acceptables en agriculture.

2. Une composition herbicide selon la revendication 1, caractérisée en ce que l'herbicide du type acide oxoimidazolinylbenzoïque de formule générale II est l'imazaméthabenz-méthyl qui est un mélange de 6-(4-isopropyl-4-méthyl-5-oxo-2-imidazoline-2-yl)-m-toluate de méthyle et de 2-(4-isopropyl-4-méthyl-5-oxo-2-imidazoline-2-yl)-p-toluate de méthyle.

3. Une composition herbicide selon la revendication 1 ou 2, caractérisée en ce que le rapport de (a) à (b) est de 20:1 à 1:2 en poids.

4. Une composition herbicide selon la revendication 1, 2 ou 3, caractérisée en ce qu'elle comprend de 0,05 à 90 % en poids de (a) et (b).

5. Une composition herbicide selon l'une quelconque des revendications précédentes, caractérisée en ce qu'elle comprend un agent tensioactif.

6. Un procédé de maîtrise de la croissance des mauvaises herbes dans un endroit qui consiste à appliquer dans cet endroit (a) un herbicide du type acide oxoimidazolinylbenzoïque de formule générale II tel que défini à la revendication 1 et (b) du diflufénican.

7. Un procédé selon la revendication 6, caractérisé en ce que l'herbicide du type acide oxoimidazolinylbenzoïque est l'imazaméthabenz-méthyl.

8. Un procédé selon la revendication 6 ou 7, caractérisé en ce que (a) est appliqué à un taux de 125 à 500 g d'ingrédient actif par hectare et (b) est appliqué à un taux de 25 à 250 g/ha dans des proportions de 20:1 à 1:2 en poids.

9. Un produit, caractérisé en ce qu'il comprend (a) un herbicide du type acide oxoimidazolinylbenzoïque tel que défini à la revendication 1 et (b) du diflufénican sous forme d'une préparation combinée pour l'utilisation simultanée, séparée ou séquentielle dans la maîtrise de la croissance des mauvaises herbes dans un endroit.

10. Un produit selon la revendication 9, caractérisé en ce que l'herbicide du type oxoimidazolinylbenzoïque est l'imazaméthabenz-méthyl.

**Patentansprüche**

1. Herbizides Mittel, enthaltend
   (a) ein Oxoimidazolinylbenzoesäureherbizid der allgemeinen Formel:

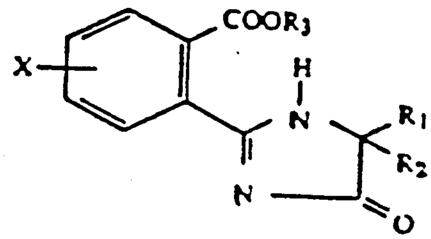

II

worin bedeuten:

X Wasserstoff, eine gerad- oder verzweigtkettige Alkylgruppe mit 1 bis 3 Kohlenstoffatom(en), Halogen oder Nitro;

$R_1$ eine gerad- oder verzweigtkettige Alkylgruppe mit 1 bis 4 Kohlenstoffatom(en);

$R_2$ eine gerad- oder verzweigtkettige Alkylgruppe mit 1 bis 6 Kohlenstoffatom(en), eine Cycloalkylgruppe mit 3 bis 6 Kohlenstoffatomen, eine gerad- oder verzweigtkettige Alkenylgruppe mit 2 bis 4 Kohlenstoffatomen, Phenyl, Halogenphenyl oder Benzyl, oder

$R_1$ und $R_2$ zusammen mit dem Kohlenstoffatom, an dem sie hängen, eine gegebenenfalls methylsubstituierte Cycloalkylgruppe mit 3 bis 6 Kohlenstoffatomen;

$R_3$ Wasserstoff, eine gerad- oder verzweigtkettige Alkylgruppe mit 1 bis 12 Kohlenstoffatom(en), die gegebenenfalls durch eine gerad- oder verzweigtkettige Alkoxygruppe mit 1 bis 3 Kohlenstoffatom(en) oder eine Cycloalkylgruppe mit 3 bis 6 Kohlenstoffatomen oder eine Phenylgruppe oder eine Furylgruppe oder durch einen bis drei Halogensubstituenten substituiert ist, eine geradoder verzweigtkettige Alkenylgruppe mit 3 bis 5 Kohlenstoffatomen, die gegebenenfalls mit einer oder zwei gerad- oder verzweigtkettigen Alkylgruppe(n) mit 1 bis 3 Kohlenstoffatom(en) oder eine Phenylgruppe oder durch einen oder zwei Halogensubstituenten substituiert ist, eine gerad- oder verzweigtkettige Alkinylgruppe mit 3 bis 5 Kohlenstoffatomen, die gegebenenfalls mit einer oder zwei gerad- oder verzweigtkettigen Alkylgruppe(n) mit 1 bis 3 Kohlenstoffatom(en) oder eine Phenylgruppe oder durch einen oder zwei Halogensubstituenten substituiert ist, eine Benzyl-, Cyclohexenylmethyl-, Ethinylcyclohexyl-, Ethinylallyl-, Pentadienyl- oder eine Cycloalkylgruppe mit 3 bis 6 Kohlenstoffatomen, die gegebenenfalls durch eine oder zwei gerad- oder verzweigtkettige Alkylgruppe(n) mit 1 bis 3 Kohlenstoffatom(en) substituiert ist, oder ein salzbildendes Kation, oder im Falle, daß $R_1$ und $R_2$ nicht gleich sind, ein optisches Isomeres oder Isomerengemisch desselben oder, mit Ausnahme des Falles, daß $R_3$ für ein salzbildendes Kation steht, ein Säureadditionssalz desselben, und

(b) Diflufenican [N-(2,4-Difluorphenyl)-2-(3-trifluormethylphenoxy)-nicotinamid]

in Verbindung mit einem aus landwirtschaftlichen Gesichtspunkten akzeptablen Verdünnungsmittel oder Träger und/oder oberflächenaktiven Mittel.

**2.** Herbizides Mittel nach Anspruch 1, dadurch gekennzeichnet, daß es sich bei dem Oxoimidazolinylbenzoesäureherbizid der allgemeinen Formel (II) um Imazamethabenzmethyl, nämlich ein Gemisch aus Methyl-6-(4-isopropyl-4-methyl-5-oxo-2-imidazolin-2-yl)-m-toluat und Methyl-2-(4-isopropyl-4-methyl-5-oxo-2-imidazolin-2-yl)-p-toluat, handelt.

**3.** Herbizides Mittel nach Anspruch 1 oder 2, dadurch gekennzeichnet, daß das Verhältnis (a)/(b) 20/1 bis 1/2 g/g beträgt.

**4.** Herbizides Mittel nach Anspruch 1, 2 oder 3, dadurch gekennzeichnet, daß es 0,05 - 90 Gew.-% (a) und (b) enthält.

**5.** Herbizides Mittel nach einem der vorhergehenden Ansprüche, dadurch gekennzeichnet, daß es ein oberflächenaktives Mittel enthält.

**6.** Verfahren zur Bekämpfung des Unkrautwachstums an einem bestimmten Ort bzw. an einer bestimmten Stelle durch Applikation

(a) eines Oxoimidazolinylbenzoesäureherbizids der allgemeinen Formel (II) gemäß Anspruch 1 und von

(b) Diflufenican auf den betreffenden Ort bzw. an der betreffenden Stelle.

7. Verfahren nach Anspruch 6, dadurch gekennzeichnet, daß es sich bei dem Oxoimidazolinylbenzoesäureherbizid um Imazamethabenz-methyl handelt.

8. Verfahren nach Anspruch 6 oder 7, dadurch gekennzeichnet, daß (a) in einer Menge von 125 - 500 g a.i./ha und (b) in einer Menge von 25 - 250 g/ha im Verhältnis 20/1 bis 1/20 g/g appliziert werden.

9. Produkt, umfassend
   (a) ein Oxoimidazolinylbenzoesäureherbizid gemäß Anspruch 1 und
   (b) Diflufenican als Kombinationspräparat zur gleich-zeitigen, getrennten oder aufeinanderfolgenden Verwendung bei der Bekämpfung des Unkrautwachstums an einem bestimmten Ort bzw. an einer bestimmten Stelle.

10. Produkt nach Anspruch 9, dadurch gekennzeichnet, daß es sich bei dem Oxoimidazolinylbenzoesäureherbizid um Imazamethabenz-methyl handelt.

Figure I

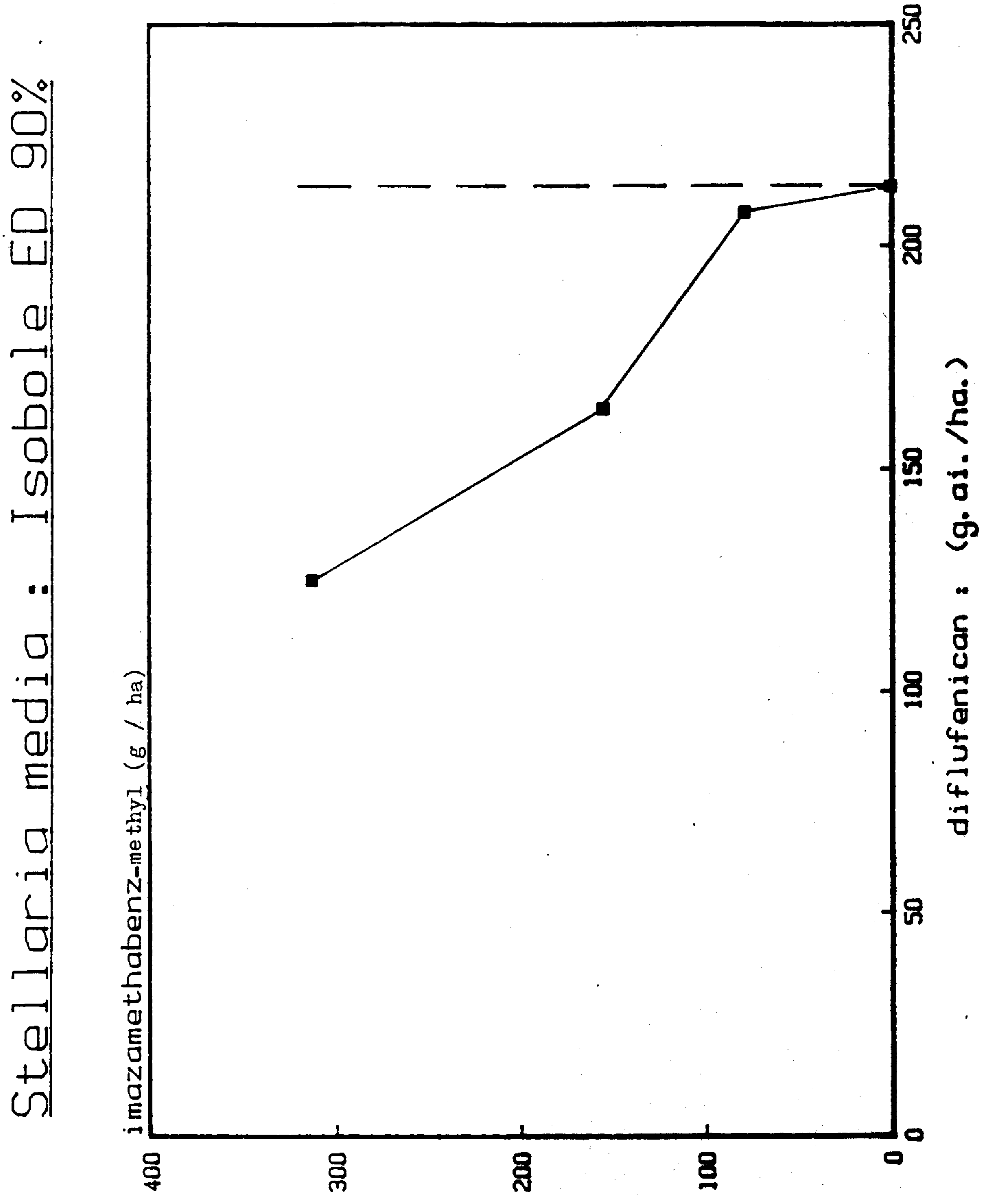
Stellaria media : Isobole ED 90%
imazamethabenz-methyl (g / ha)
diflufenican : (g.ai./ha.)
0
50
100
150
200
250
0
100
200
300
400

Figure II

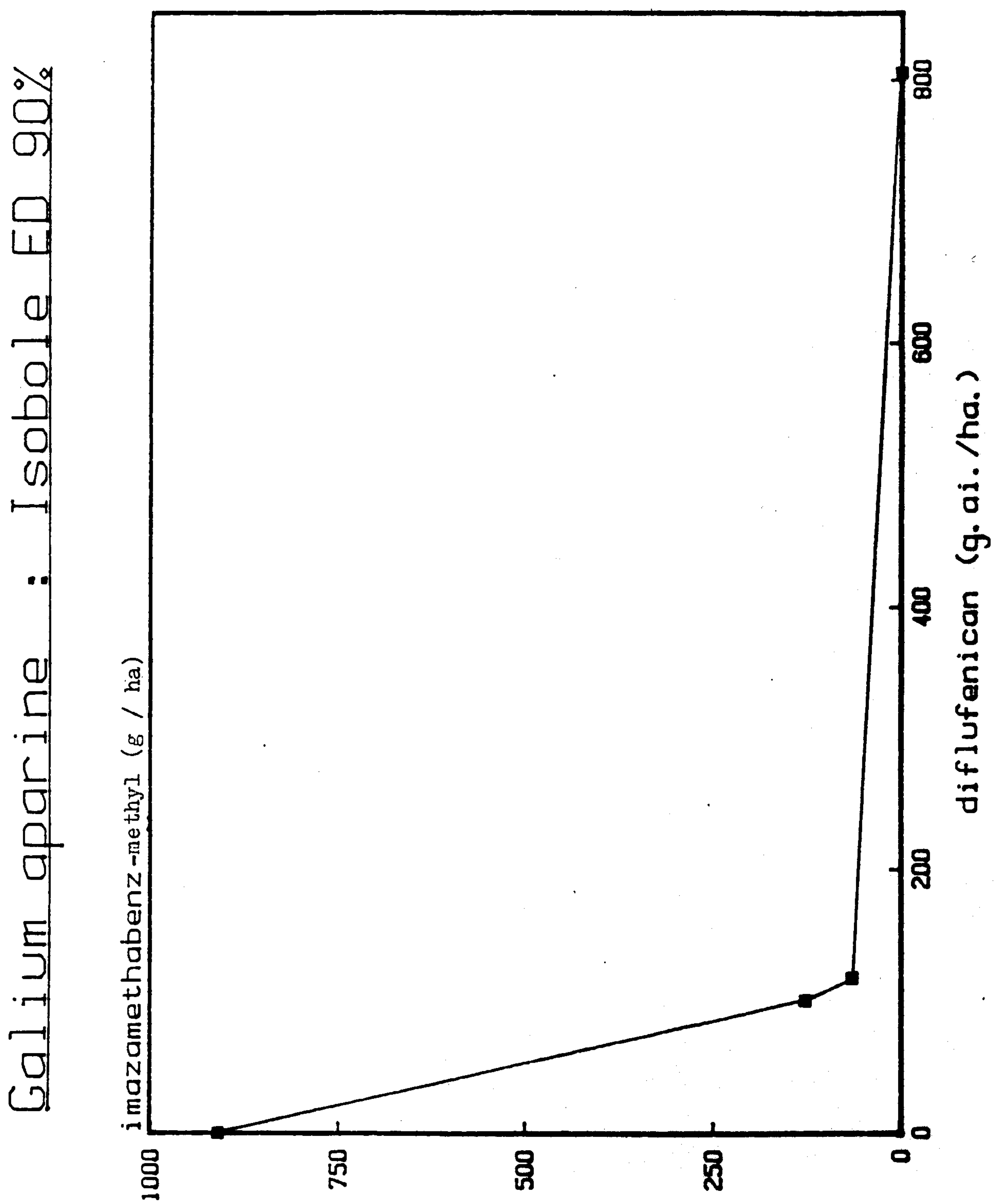
Galium aparine : Isobole ED 90%
imazamethabenz-methyl (g / ha)
1000
750
500
250
0
0
200
400
600
800
diflufanican (g.ai./ha.)

Figure III

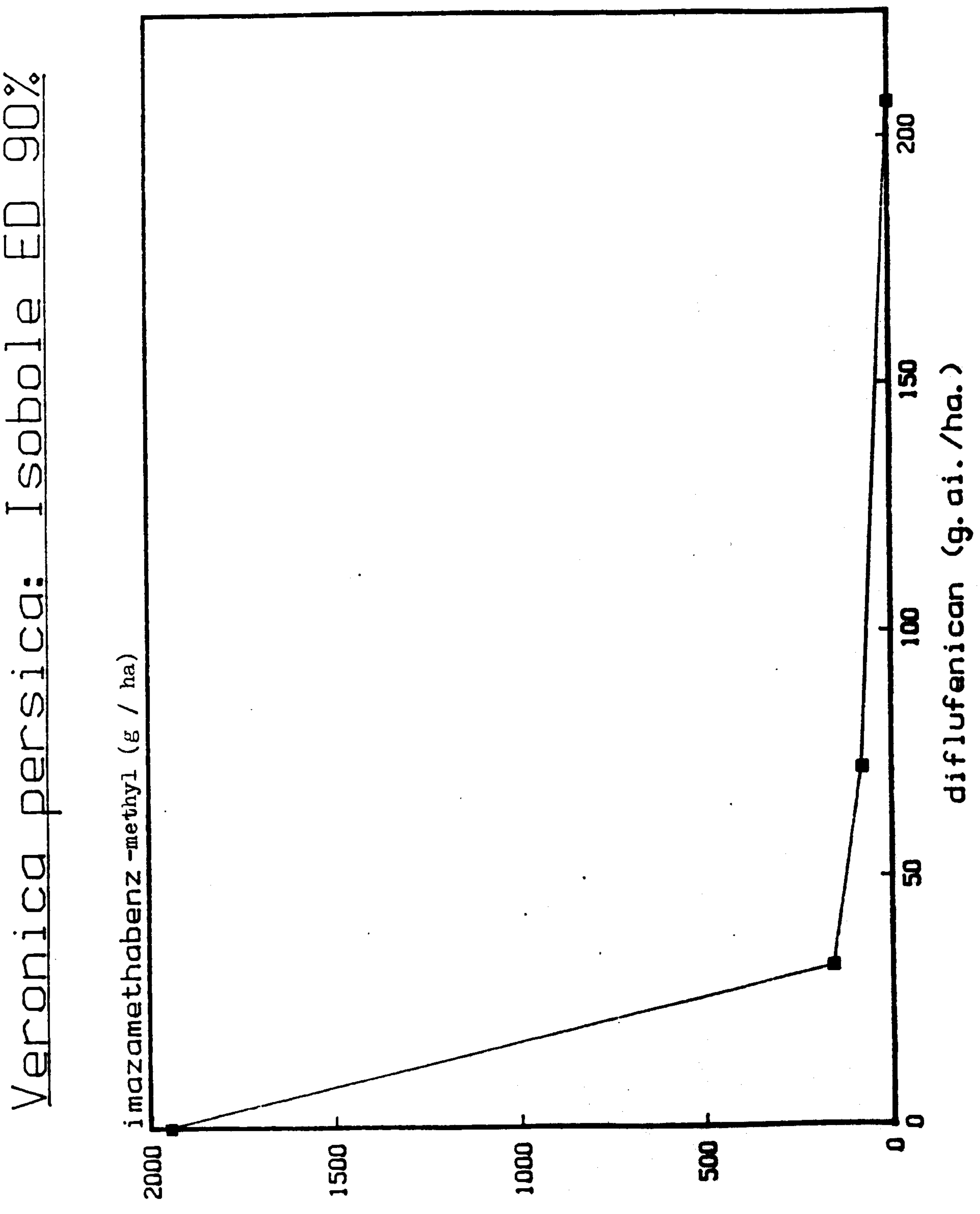
Veronica persica: Isobole ED 90%
imazamethabenz-methyl (g / ha)
2000
1500
1000
500
0
0
50
100
150
200
diflufenican (g. ai. /ha.)

Figure IV

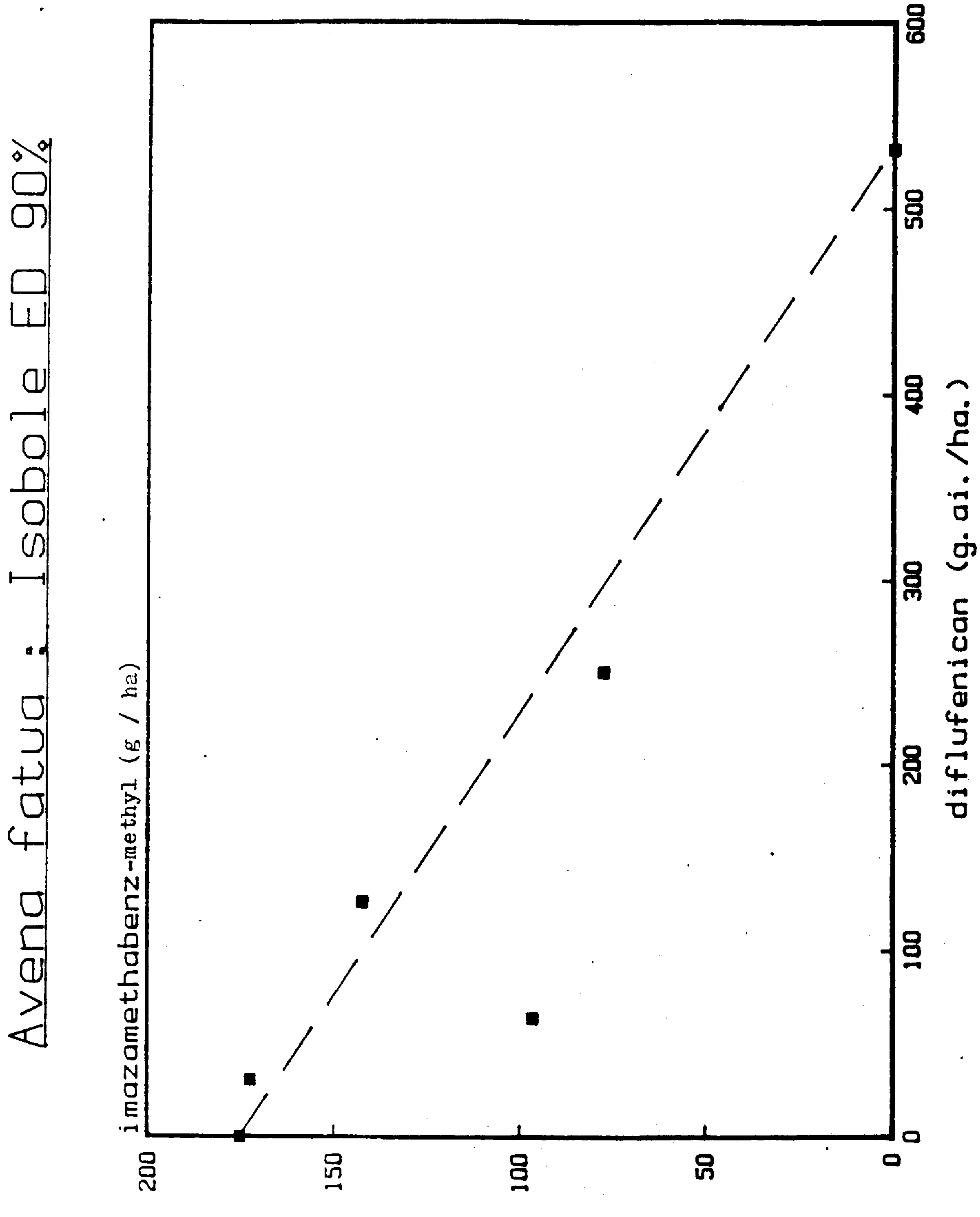
Avena fatua : Isobole ED 90%
imazamethabenz-methyl (g / ha)
diflufenican (g.ai./ha.)
0
100
200
300
400
500
600
0
50
100
150
200